# EUROPEAN PATENT APPLICATION

(11) **EP 4 796 397 A1**
(43) Date of publication of application: **26.08.2026**
(21) Application number: 26158428.8
(22) Date of filing: 13.02.2026
(51) Int. Cl.: B60T 13/74, B60T 17/22, F16D 66/00, F16D 66/02

(54) **CONTROL SYSTEM FOR A BRAKE**

(30) Priority: 24.02.2025 GB 202502633
(71) Applicant: Meritor Heavy Vehicle Braking Systems (UK) Limited, Cwmbran, Gwent NP44 3XU (GB)
(72) Inventor: Thomas, Paul, Cwmbran Gwent, NP44 3XU (GB); Cleary, Sean, Cwmbran Gwent, NP44 3XU (GB); Duggan, Simon, Cwmbran Gwent, NP44 3XU (GB); Austin, Benjamin, Cwmbran Gwent, NP44 3XU (GB); Mat, Alexander Sui-Phu, Cwmbran Gwent, NP44 3XU (GB)
(74) Representative: Whitfield, Jack Stephen

(57) **Abstract**

The invention related to a control system (10) for a brake (100) of a vehicle (200) with an electric actuator (110) that is configured to modify the distance between a brake lining (120) and a brake surface (130), the controller (10) comprising one or more processors (11) collectively configured to:
monitoring at least an electrical quantity of the electric actuator (110) for an activation of the brake (100),
determining a running clearance target value between the brake lining (120) and the brake surface (130) depending at least on the monitored electrical quantity,
driving the electric actuator (100) to modify the distance between the brake lining (120) and the brake surface (130) according to the determined running clearance target value.

The invention further relates to a brake (100), a vehicle (200), a method and computer readable instructions.

## Description

### Technical Field

This application claims priority to GB Patent Application 2502633.7 filed at the UKIPO on 24 February 2025 entitled "Control system for a brake". The present disclosure relates to a control system for a brake. Aspects of the invention relate to a bake, a vehicle, a method and computer readable instructions.

### Background

Brakes need to have a running clearance to ensure that the brake pads do not constantly rub against the brake discs or drums when the brakes are not engaged. This clearance prevents unnecessary wear and tear on the braking components, reduces heat generation, and improves fuel efficiency by minimizing friction. Additionally, it helps maintain the overall performance and longevity of the braking system, ensuring that the vehicle can stop effectively when the brakes are applied.

Adjusting the running clearance over time is crucial because the brake pads and discs naturally wear down with use, which can alter the initial clearance. Accurate adjustments ensure that the brakes continue to function optimally, providing consistent stopping power and preventing issues such as brake drag or excessive pedal travel. Regular maintenance and adjustment of the running clearance help maintain safety, performance, and efficiency of the braking system throughout the vehicle's lifespan. It is known from the state of the art to use an brake clearance adjuster, which self-adjusts during brake applications to accommodate for brake pad and disc wear.

### Summary of Invention

Aspects and embodiments of the invention provide a control system for a brake, a brake, a vehicle, a method and computer readable instructions as claimed in the appended claims.

According to one aspect of the invention, a control system for a brake of a vehicle with an electric actuator that is configured to modify the distance between a brake lining and a brake surface is provided. The control system comprises one or more processors collectively configured to monitor at least an electrical quantity of the electric actuator for an activation of the brake , determine a running clearance target value between the brake lining and the brake surface depending at least on the monitored electrical quantity, and driving the electric actuator to modify the distance between the brake lining and the brake surface according to the determined running clearance target value.

In other words, a system for a braking mechanism of a transport vehicle with an electric motor that is designed to modify the gap between a friction pad and a rotor may be provided. The system may include one or more computing units collectively configured to observe at least an electrical parameter of the electric motor during the activation of the brake while the vehicle decelerates, determine a target running clearance between the friction pad and the rotor based at least on the observed electrical parameter, and operate the electric motor to adjust the gap between the friction pad and the rotor according to the determined target running clearance value.

A control system may be understood as a device configured to manage the operation of a brake.

A brake may be understood as a device for slowing or stopping a vehicle. Further, a brake may be configured to provide a deceleration of a vehicle through providing friction between two components, in particular a brake lining and a brake surface. A brake may for example be a disk brake or drum brake.

A vehicle may be understood as a means of transport. The vehicle may be a car, a truck or any other type of vehicle that has a brake, in particular a brake that is configured to provide a deceleration of a vehicle through providing friction between two components.

An electric actuator can be understood as a device that converts electrical energy into mechanical motion. The actuator may comprise an electric motor to convert the electrical energy into mechanical motion. The actuator may be configured to generate a rotational or linear movement, which may be transferred to a mechanical component, such as a rod or a gear, to perform a specific action. This action may be to adjust the distance between the brake lining and the brake surface. The actuator may further comprise a power supply, a control unit to manage the input signals, gears or a screw mechanism to convert the motor's rotation into linear motion, and at least one sensor to provide feedback on the actuator's position.

A brake lining may be understood as a component that, when pressed against a brake surface to decelerate the vehicle, creates friction. A brake lining may be a brake pad or a or brake shoe. A brake surface may be a brake disk or a brake shoe. A brake linings may have backing plates, in particular made of steel, with friction material bound to the surface that faces the brake surface. In the context of this invention, a brake lining may be understood as a device that is configured to provide friction when pressed against a rotating part, leading to a deceleration of the vehicle. In the context of the invention, it does not matter whether the brake lining and/or the brake surface is being moved in order to provide the friction for the deceleration. The brake lining may also provide friction when the vehicle is at least stationary, parked or on an incline.

A brake surface, which may also be referred to as a rotor or a drum, can be understood as a rotating disc or drum that is slowed or stopped by the brake lining. In the context of this invention, a brake surface may be understood as any rotating part of the vehicle that provides a braking force when it is in mechanical contact with a brake lining.

A brake caliper or drum brake may be provided, which may house at least one brake lining or brake shoe. The brake caliper may be mounted over the brake surface. When the driver or a driver assistance system applies the brakes, a rod driven by the electric actuator may move the brake caliper to push the at least one brake lining against the rotating brake surface.

A brake adjuster may be understood as a device included within or added to a brake, in particular a foundation brake, to maintain a target running clearance. It may be provided that the brake adjuster is at least partially, in particular completely, independent of the control system according to the invention. In other words, the electric actuator may modify the distance between a brake pad lining and a brake disk surface independently of or addition to the clearance target of the existing brake adjuster.

A processor may be understood as a unit that performs computations in particular on at least one of an external data source, memory or other data stream. The processor may be configured as a microprocessor.

Monitoring may be understood as the process of at least observing or recording, in particular continuously, the electrical quantity, in particular a voltage, a current, or a power applied to the electric actuator. Monitoring may comprise reading out at least one sensor to detect the electrical quantity. These data may then be processed by a processor of the control system. By monitoring an electrical quantity, the control system can make real-time adjustments, trigger alerts, or initiate corrective actions to ensure optimal performance, safety, and reliability of the electrical components and the control system and the brake. The monitoring is performed during a deceleration of the vehicle. This may mean that the vehicle is decelerating in a traffic situation, in particular in contrast to the brake being mounted on a test or calibration stand. This way, real-time data is gathered that may be more accurate than historical data.

An activation of the brake may be induced by a system of the vehicle, in particular an advanced driver's assistance system, (ADAS) and/or an input from the driver. In other words, an activation of the brake may occur when there is a demand from the driver and/or sub-system of the vehicle. It is understood that the brake may be considered active independent from whether the vehicle is standing or moving. In other words, an activation of the brake may be at least a force applied by brake lining on the brake surface or a movement of the brake lining towards the brake surface.

Determining may be understood as the process of at least calculating or establishing a specific value, in this case, the running clearance target value between the brake lining and the brake surface, based on the monitored electrical quantity. This may involve analyzing the data collected from at least one sensor that measures the electrical quantity, in particular a voltage, a current, or a power of the electric actuator. The control system may use this data to assess the current state of the brake components and their interaction. It may be provided that at least one predefined algorithm is applied that is configured to calculate the running clearance target value that should be maintained between the brake lining and the brake surface when the brake is not applied to ensure effective braking performance and no friction between the brake lining and the brake surface when the brake is not applied. This calculated target value may then be used to adjust the actuator's operation, thereby optimizing braking efficiency, safety, and wear of the brake components.

Driving may be understood as the process of controlling the electric actuator to modify the distance between the brake lining and the brake surface based on the previously determined running clearance target value. This may involve sending an electrical signal from the processor to the actuator, instructing it to move in a specific manner. The actuator, which may be configured to convert this electrical signal into a mechanical motion, may then either increase or decrease the gap between the brake lining and the brake surface. This adjustment ensures that the brake lining is optimally positioned to provide effective braking force while minimizing wear and maintaining safety.

Further, it may be provided that an action of the brake system, particularly in connection with ABS (Anti-lock Braking System) or other driver-assisting functions, is adjusted based on the electrical quantity of the actuator. For example, the ABS system can use real-time data on current and voltage to assess the braking force being applied and adjust the modulation of brake pressure to prevent wheel lockup. For example, if the monitoring indicates a higher than usual current draw, suggesting increased brake lining wear or overheating, the system can reduce the braking force to prevent excessive stress on the components. Similarly, other driver-assisting functions like electronic stability control (ESC) can use this data to optimize brake distribution across wheels, enhancing vehicle stability during maneuvers. By continuously monitoring and responding to electrical quantities, these systems can dynamically adjust their operations to maintain optimal braking performance and ensure driver safety under various driving conditions.

In summary, the control system may monitor the actuator's performance and make real-time corrections as needed to maintain the desired clearance, ensuring consistent and reliable braking performance.

It may be provided that the one or more processors collectively are further configured to at least measure a vehicle parameter, in particular at least one of a deceleration of the vehicle, a temperature of a component of the brake, a swelling of the brake lining, a stiffness of a brake caliper, a friction coefficient between the brake lining and the brake surface, or a running clearance of the brake, or compare the vehicle parameter with a threshold.

In other words, the processors may be configured to collect data that is specific for a vehicle parameter such as deceleration, temperature, swelling, stiffness, friction coefficient, or running clearance, or compare the parameter with a threshold. This ensures precise and safe adjustment of the brake system.

A vehicle parameter can be understood as a measurable factor related to the vehicle's operation.

This provides the advantage that further information is available that could be used to determine e.g. the running clearance target value or further values. Also, these data can be used as input values and/or training data for a model.

It is further conceivable that the measured vehicle parameter and/or a result of the comparison with the threshold is used when determining the running clearance target value. In other words, determining a running clearance target value may further depend on the vehicle parameter or the comparison of the vehicle parameter with a threshold. In an example, the running clearance target value determined based on the electrical quantity may be increased or decreased when the vehicle parameter is above the threshold.

This provides the advantage that the running clearance target value can take the vehicle parameter into account, which may lead to an even more precise running clearance target value.

Furthermore, it is conceivable that determining the running clearance target value comprises the application of a learned model, in particular a machine learned model. To put it another way, the running clearance target value may be calculated using a model which has been trained with training data, such as a machine learned model. This enhances the precision and adaptability of the control system.

A learned model may be understood as a system trained to make a prediction, in particular a determination of a value, based on data.

The models may be at least one of a neural network, a decision tree, or a support vector machine which may be employed to determine the running clearance target value. The model may be trained using a dataset that may include an operational parameter of at least the brake, the vehicle or the environment, in particular a temperature, a speed, a brake lining wear, or historical performance data. By continuously learning from this data, the model can optimize the clearance to ensure optimal braking performance, reduce wear and tear, and enhance safety. This approach allows for a more responsive and efficient braking system that can adapt to changing conditions and improve overall vehicle performance.

Furthermore, it is conceivable that the model is trained with at least an electrical quantity of the electric actuator and a running clearance target value. In other words, the model may be trained using electrical quantities of the actuator and running clearance target values. This improves the accuracy and reliability of the system.

For example, the model may comprise a neural network model trained to optimize the running clearance target value for a brake system. In this example, the model may be trained using a dataset that includes at least one electrical quantity from the electric actuator, such as current, voltage, and power consumption, along with corresponding running clearance target values. The training process involves feeding this data into the neural network, allowing it to learn the complex relationships between the electrical quantities and the optimal clearance values. For example, the model might learn that higher current levels correlate with increased brake lining wear, necessitating a larger clearance to maintain performance. Once trained, the neural network can take real-time electrical quantity inputs from the actuator and predict the optimal running clearance target value, ensuring efficient and safe braking performance under varying conditions. This approach leverages the model's ability to adapt to new data, continuously improving its predictions and enhancing the overall reliability of the brake system.

Furthermore, it is conceivable that the model is trained with a vehicle parameter, in particular at least one of a deceleration of the vehicle, a temperature of a component of the brake, a swelling of the brake lining, a stiffness of a brake caliper, a friction coefficient between the brake lining and the brake surface, or a running clearance of the brake. This ensures the model's robustness and effectiveness.

By way of example, the model may be trained with deceleration of the vehicle in combination with a supervised learning paradigm. In this case, a regression model, such as a linear regression or a more complex model like a gradient boosting machine, can be employed. The training dataset may include historical data on vehicle deceleration rates, along with corresponding running clearance target values. The model may learn to map the relationship between deceleration and the optimal clearance.

Supervised learning is particularly effective because it allows the model to learn from labeled data, where the input-output pairs are clearly defined. This paradigm ensures that the model can accurately predict the running clearance target value based on new deceleration data. The choice of a regression model is suitable because it can handle continuous output values, which is essential for predicting precise clearance adjustments. By training on a diverse dataset that captures various driving conditions and deceleration patterns, the model can generalize new, unseen data, resulting in robust performance and reliable predictions in real-world scenarios.

In another example, the temperature of a component of the brake could be trained using unsupervised learning in combination with a clustering algorithm, in particular k-means. The model may group temperature readings into clusters that correspond to different clearance adjustments. This approach helps identify patterns in temperature data that correlate with optimal clearance values without needing labeled data.

In another example, the model may be trained with a swelling of the brake lining with reinforcement learning. The model, in particular a Q-learning algorithm, may learn the optimal running clearance by interacting with the environment. It receives rewards based on the braking performance and adjusts the clearance to maximize the cumulative reward, effectively learning the best clearance settings through trial and error.

In another example, the model may be trained with the stiffness of a brake caliper with semi-supervised learning. A model like self-training can be used, where a small amount of labeled data (stiffness measurements and clearance values) is combined with a large amount of unlabeled, in particular synthetic, data. The model iteratively labels the unlabeled data and retrains itself, improving its predictions over time.

In another example, the model may be trained with the friction coefficient between the brake lining and the brake surface with transfer learning. A pre-trained model on a similar task (e.g., predicting wear and tear in mechanical systems) can be fine-tuned with a smaller dataset of friction coefficients and clearance values. This approach leverages existing knowledge to improve performance on the new task.

In yet another example, the model may be trained with the running clearance of the brake with unsupervised learning and principal component analysis (PCA). PCA reduces the dimensionality of the data, identifying the most significant features that influence running clearance. This helps in understanding the underlying structure of the data and optimizing the clearance based on the most critical factors.

It is understood that each of the parameters described in connection with a learning strategy could be replaced with another parameter of the list, or multiple parameters or multiple learning strategies could be combined.

Also, the control system comprising one or more processors collectively may further be configured to train a model, in particular with at least one of the vehicle parameters.

Furthermore, it is conceivable that the model is trained over a predetermined time or a predetermined travel distance of the vehicle. In other words, the model may be trained over a set period or distance traveled by the vehicle. This allows the system to adapt to changes and maintain accuracy.

For instance, training the model over a period of at least one month, in particular at least eight or 12 months, can encompass various seasonal conditions, such as temperature fluctuations and weather changes, which affect braking performance. Similarly, using distance intervals of several thousand kilometers ensures that the model learns from diverse driving conditions, including urban, suburban, and highway environments. These intervals allow the model to account for different wear and tear patterns, traffic conditions, and driving behaviors, leading to a robust and well-rounded understanding of the factors influencing the running clearance of the brake. This comprehensive training approach enhances the model's ability to make accurate and reliable predictions in real-world scenarios.

In another example training the model over using a relatively short interval could be a period of one week or less and/or a distance of 500 kilometers or less. This shorter interval allows the model to quickly adapt to recent changes in driving conditions and vehicle performance. For instance, if the vehicle has undergone maintenance or if there are sudden changes in weather conditions, the model can promptly incorporate this new data to adjust the running clearance target value. The advantage of this approach is that it enables the model to provide more immediate and responsive adjustments, enhancing the safety and efficiency of the braking system in real-time. Additionally, it allows for frequent updates and fine-tuning, ensuring that the model remains accurate and relevant to the current state of the vehicle and its operating environment.

It is further conceivable that the model is trained over two predetermined times or two predetermined travel distances of the vehicle. The times and/or distances may be a shorter and a longer time and/or distance, in particular as described in the two examples.

Furthermore, it is conceivable that determining the running clearance target value further depends on an environmental parameter, in particular at least one of a temperature, lifetime of the brake, a traffic situation or a road condition. To put it another way, the running clearance target value may also consider environmental parameters. This ensures the system's adaptability to varying conditions.

An environmental parameter can be understood as a factor related to the surrounding conditions of the control system and/or the brake and/or the vehicle.

For instance, if the temperature of the brake components rises significantly due to prolonged braking or high ambient temperatures, the model can predict that the brake linings might expand. This expansion requires an adjustment in the running clearance to prevent excessive wear and ensure optimal braking performance. Simultaneously, the electrical quantity data from the actuator provides insights into the braking force being applied and the actuator's operational state.

By combining the electrical quantity with one of the environmental parameters, the model can make more accurate and context-aware adjustments to the running clearance. The advantage of this combination is that it allows the model to account for both the environmental, e.g. thermal effects, on the brake components and the real-time operational status of the actuator. This leads to a more responsive and adaptive braking system that can maintain safety and efficiency under varying conditions, such as during heavy traffic, steep descents, or extreme weather. This approach ensures that the braking system remains reliable and effective, enhancing overall vehicle performance and safety.

Furthermore, it is conceivable that the one or more processors collectively are further configured to at least store at least the running clearance in a memory, or send at least the running clearance target value, in particular via a bus system of the vehicle, to another system of the vehicle. In other words, the processors may store the running clearance in memory or send the target value to another vehicle system via a bus system. This facilitates data sharing and system integration.

A bus system can be understood as a communication system within a vehicle.

For example, the running clearance target value may be written to a non-volatile memory. Further, the running clearance target value may be transmitted through the vehicle's communication network, such as a CAN bus, to other electronic control units (ECUs). Also, the running clearance target value may be sent to integrated with systems of the vehicle such as a braking control unit, a traction control system, or a stability control system. This enables real-time adjustments to the running clearance as well as the functioning of these systems, ensuring optimal braking performance and enhancing overall vehicle safety and reliability.

Furthermore, it is conceivable that the one or more processors collectively are further configured to at least determine a brake health status of the brake, in particular depending on the electrical quantity. This enhances the safety and maintenance of the brake system.

A brake health status may be understood as an assessment of the brake's condition.

For example, the brake health status may be determined by analyzing an electrical quantity of the brake actuator, in particular the current, the voltage, or the power consumption. These electrical parameters may provide insights into the operational state of the braking system. For instance, an increase in current drawn during a braking activation might indicate higher resistance due to brake lining wear or misalignment, while fluctuations in voltage could signal issues with the actuator's performance. By continuously monitoring these electrical quantities, the system can detect anomalies and predict potential failures, allowing for timely maintenance and ensuring the brake system remains in optimal condition. This proactive approach enhances vehicle safety and reliability by addressing issues before they lead to significant problems.

According to a further aspect of the invention, a brake comprising a control system according to one of the preceding claims is provided.

This gives the brake the same advantages as those already described in detail in connection with an invention-related control system.

According to a further aspect of the invention, a vehicle comprising at least a control system according to the invention or the brake according to the invention is provided. This gives the vehicle the same advantages as those already described in detail in connection with an invention-related control system and/or brake.

According to a further aspect of the invention, a method for controlling a control system, in particular a control system according to the invention, for a brake of a vehicle with an electric actuator that is configured to adjust the distance between a brake lining and a brake surface is provided. The method comprises monitoring at least an electrical quantity of the electric actuator for an activation of the brake during a deceleration of the vehicle, determining a running clearance target value between the brake lining and the brake surface depending at least on the monitored electrical quantity, and driving the electric actuator to adjust the distance between the brake lining and the brake surface according to the determined running clearance.

This gives the method the same advantages as those already described in detail in connection with an invention-related control system and/or brake.

The steps of the method can be performed in the order that is stated in the claim or in any other order. Some or all steps can be repeated. Further, the method may be a computer implemented method.

According to a further aspect of the invention, computer readable instructions which, when executed by a computer, are arranged to perform a method according to the invention are provided.

This gives the computer readable instructions the same advantages as those already described in detail in connection with an invention-related control system and/or brake and/or method.

A further aspect of the invention may be a computer-readable storage medium comprising instructions which, when executed by a computer, cause the computer, in particular the control system according to the invention, to carry out the method according to the invention.

Yet a further aspect of the invention may be a computer program product comprising instructions which, when the program is executed by a computer, cause the computer, in particular the control system according to the invention, to carry out the method according to the invention.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### Brief Description of Drawings

One or more embodiments of the invention will now be described, by way of example only, with reference to the accompanying drawings, in which:
Figure 1 is a front view of a control system and a brake according to an embodiment of the invention;
Figure 2 is another front view of a control system and a brake according to an embodiment of the invention; and
Figure 3 is a side view of a of a control system, a brake and a vehicle according to an embodiment of the invention; and
Figure 4 is a schematic overview of a method according to an embodiment of the invention.

### Detailed Description

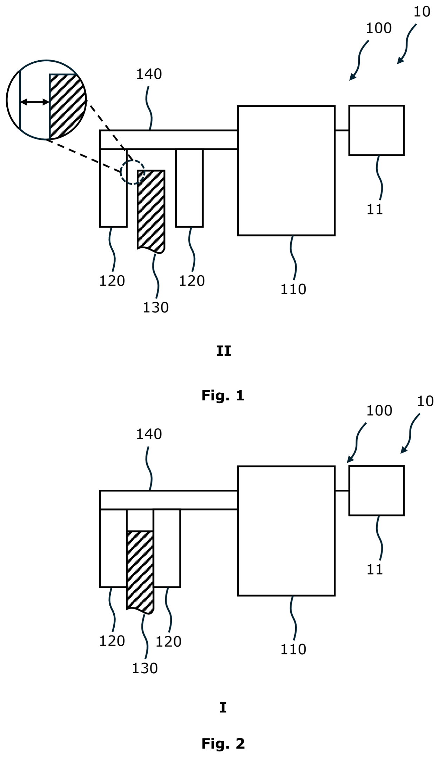

With reference to Figure 1, there are illustrated a brake 100 and a control system 10. The brake 100 is in a free running state II, in which the brake linings 120 are not in contact with the brake surface 130. A magnified view is shown which illustrates the running clearance with an arrow. In the free running state II, as there is no contact between the brake linings 120 and the brake surface 130, the vehicle 200 is not decelerated by the brake 100. This is in contrast to the decelerating state I, which is shown in Figure 2. There, the brake linings 120 are in contact with the brake surface 130, creating friction that leads to a deceleration or stopping of the vehicle 200.

According to one aspect of the invention that is shown particularly in Figures 1 and 2, a control system 10 for a brake 100 of a vehicle 200 with an electric actuator 110 that is configured to adjust the distance between a brake lining 120 and a brake surface 130 is provided. The control system 10 comprises one or more processors 11 collectively configured to monitor at least an electrical quantity of the electric actuator 110 for an activation of the brake 100 during a deceleration of the vehicle 200, determine a running clearance target value between the brake lining 120 and the brake surface 130 depending at least on the monitored electrical quantity, and driving the electric actuator 110 to adjust the distance between the brake lining 120 and the brake surface 130 according to the determined running clearance target value.

In other words, a system for a braking mechanism of a transport vehicle 200 with an electric motor 110 that is designed to modify the gap between a friction pad 120 and a rotor 130 may be provided. The system may include one or more computing units 11 collectively configured to observe at least an electrical parameter of the electric motor 110 during the activation of the brake 100 while the vehicle 200 decelerates, determine a target running clearance between the friction pad 120 and the rotor 130 based at least on the observed electrical parameter, and operate the electric motor 110 to adjust the gap between the friction pad 120 and the rotor 130 according to the determined target running clearance value.

A control system 10 may be understood as a device configured to manage the operation of a brake 100.

A brake 100 may be understood as a device for slowing or stopping a vehicle 200. Further, a brake 100 may be configured to provide a deceleration of a vehicle 200 through providing friction between two components, in particular a brake lining 120 and a brake surface 130. A brake 100 may for example be a disk brake or drum brake.

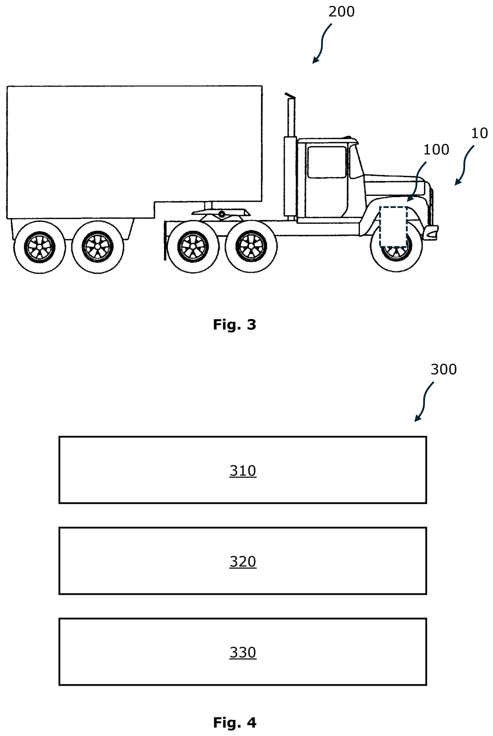

A vehicle 200, e.g. shown in Figure 3, may be understood as a means of transport. The vehicle 200 may be a car, a truck or any other type of vehicle that has a brake 100, in particular a brake 100 that is configured to provide a deceleration of a vehicle 200 through providing friction between two components.

An electric actuator 110, as shown in Figures 1 and 2, can be understood as a device that converts electrical energy into mechanical motion. The actuator 110 may comprise an electric motor to convert the electrical energy into mechanical motion. The actuator 110 may be configured to generate a rotational or linear movement, which may be transferred to a mechanical component, such as a rod or a gear, to perform a specific action. This action may be to adjust the distance between the brake lining 120 and the brake surface 130. The actuator 110 may further comprise a power supply, a control unit to manage the input signals, gears or a screw mechanism to convert the motor's rotation into linear motion, and at least one sensor to provide feedback on the actuator's position.

A brake lining 120, which is also shown in Figures 1 and 2, may be understood as a component that, when pressed against a brake surface 130 to decelerate the vehicle 200, creates friction. Brake linings 120 may have backing plates, in particular made of steel, with friction material bound to the surface that faces the brake surface 130. In the context of this invention, a brake lining 120 may be understood as a device that is configured to provide friction when pressed against a rotating part, leading to a deceleration of the vehicle 200. In the context of the invention, it does not matter whether the brake lining 120 and/or the brake surface 130 is being moved in order to provide the friction for the deceleration.

A brake surface 130, which is shown in a front view in Figure 1 and 2, can be understood as a rotating disc that is slowed or stopped by the brake lining 120. In the context of this invention, a brake surface 130 may be understood as any rotating part of the vehicle 200 that provides a deceleration of the vehicle 200 when it is in mechanical contact with a brake lining 120.

In the example shown in Figures 1 and 2, a brake caliper 140 is provided, which may house at least one brake lining 120. The brake caliper 140 may be mounted over the brake surface 130. When the driver or a driver assistance system applies the brakes, a rod driven by the electric actuator 110 may move the brake caliper 140 to push the at least one brake lining 120 against the rotating brake surface 130 (decelerating state I, Fig. 2).

A processor 11 may be understood as a unit that performs computations in particular on at least one of an external data source, memory or other data stream. The processor 11 may be configured as a microprocessor.

Monitoring 310, which is also illustrated in connection with the method 300 in Figure 4, may be understood as the process of at least observing or recording, in particular continuously, the electrical quantity, in particular a voltage, a current, or a power applied to the electric actuator 110. Monitoring 310 may comprise reading out at least one sensor to detect the electrical quantity. These data may then be processed by a processor 11 of the control system 10. By monitoring 310 an electrical quantity, the control system 10 can make real-time adjustments, trigger alerts, or initiate corrective actions to ensure optimal performance, safety, and reliability of the electrical components and the control system 10 and the brake 100. The monitoring 310 is performed during a deceleration of the vehicle 200. This may mean that the vehicle 200 is decelerating in a traffic situation, in particular in contrast to the brake 100 being mounted on a test or calibration stand. This way, real-time data is gathered that may be more accurate than historical data.

Determining 320, which is also illustrated in connection with the method 300 in Figure 4, may be understood as the process of at least calculating or establishing a specific value, in this case, the running clearance target value between the brake lining 120 and the brake surface 130, based on the monitored electrical quantity. This may involve analyzing the data collected from at least one sensor that measures the electrical quantity, in particular a voltage, a current, or a power of the electric actuator 110. The control system 10 may use this data to assess the current state of the brake 100 components and their interaction. It may be provided that at least one predefined algorithm is applied that is configured to calculate the running clearance target value that should be maintained between the brake lining 120 and the brake surface 130 when the brake 100 is not applied to ensure effective braking performance and no friction between the brake lining 120 and the brake surface 130 when the brake 100 is not applied. This calculated target value may then be used to adjust the actuator's 110 operation, thereby optimizing braking efficiency, safety, and wear of the brake 100 components.

Driving 330, which is also illustrated in connection with the method 300 in Figure 4, may be understood as the process of controlling the electric actuator 110 to modify the distance between the brake lining 120 and the brake surface 130 based on the previously determined running clearance target value. This may involve sending an electrical signal from the processor 11 to the actuator 110, instructing it to move in a specific manner. The actuator 110, which may be configured to convert this electrical signal into a mechanical motion, may then either increase or decrease the gap between the brake lining 120 and the brake surface 130. This adjustment ensures that the brake lining 120 is optimally positioned to provide effective braking force while minimizing wear and maintaining safety.

Further, it may be provided that an action of the brake system 10, particularly in connection with ABS (Anti-lock Braking System) or other driver-assisting functions, is adjusted based on the electrical quantity of the actuator 110. For example, the ABS system can use real-time data on current and voltage to assess the braking force being applied and adjust the modulation of brake pressure to prevent wheel lockup. For example, if the monitoring indicates a higher than usual current draw, suggesting increased brake lining 120 wear or overheating, the system can reduce the braking force to prevent excessive stress on the components. Similarly, other driver-assisting functions like electronic stability control (ESC) can use this data to optimize brake distribution across wheels, enhancing vehicle 200 stability during maneuvers. By continuously monitoring and responding to electrical quantities, these systems can dynamically adjust their operations to maintain optimal braking performance and ensure driver safety under various driving conditions.

In summary, the control system 10 may monitor the actuator's 110 performance and make real-time corrections as needed to maintain the desired clearance, ensuring consistent and reliable braking performance.

It may be provided that the one or more processors 11 collectively are further configured to at least measure a vehicle parameter, in particular at least one of a deceleration of the vehicle 200, a temperature of a component of the brake 100, a swelling of the brake lining 120, a stiffness of a brake caliper 140, a friction coefficient between the brake lining 120 and the brake surface 130, or a running clearance of the brake 100, or compare the vehicle parameter with a threshold.

In other words, the processors 11 may be configured to collect data that is specific for a vehicle parameter such as deceleration, temperature, swelling, stiffness, friction coefficient, or running clearance, or compare the parameter with a threshold. This ensures precise and safe adjustment of the brake 100.

A vehicle parameter can be understood as a measurable factor related to the vehicle's operation.

This provides the advantage that further information is available that could be used to determine e.g. the running clearance target value or further values. Also, these data can be used as input values and/or training data for a model.

It is further conceivable that the measured vehicle parameter and/or a result of the comparison with the threshold is used when determining the running clearance target value. In other words, determining a running clearance target value may further depend on the vehicle parameter or the comparison of the vehicle parameter with a threshold. In an example, the running clearance target value determined based on the electrical quantity may be increased or decreased when the vehicle parameter is above the threshold.

This provides the advantage that the running clearance target value can take the vehicle parameter into account, which may lead to an even more precise running clearance target value.

Furthermore, it is conceivable that determining the running clearance target value comprises the application of a learned model, in particular a machine learned model. To put it another way, the running clearance target value may be calculated using a model which has been trained with training data, such as a machine learned model. This enhances the precision and adaptability of the control system.

A learned model may be understood as a system trained to make a prediction, in particular a determination of a value, based on data.

The models may be at least one of a neural network, a decision tree, or a support vector machine which may be employed to determine the running clearance target value. The model may be trained using a dataset that may include an operational parameter of at least the brake 100, the vehicle 200 or the environment, in particular a temperature, a speed, a brake lining 120 wear, or historical performance data. By continuously learning from this data, the model can optimize the clearance to ensure optimal braking performance, reduce wear and tear, and enhance safety. This approach allows for a more responsive and efficient braking system that can adapt to changing conditions and improve overall vehicle 200 performance.

Furthermore, it is conceivable that the model is trained with at least an electrical quantity of the electric actuator 110 and a running clearance target value. In other words, the model may be trained using electrical quantities of the actuator 110 and running clearance target values. This improves the accuracy and reliability of the system.

For example, the model may comprise a neural network model trained to optimize the running clearance target value for a brake 100 system. In this example, the model may be trained using a dataset that includes at least one electrical quantity from the electric actuator 110, such as current, voltage, and power consumption, along with corresponding running clearance target values. The training process involves feeding this data into the neural network, allowing it to learn the complex relationships between the electrical quantities and the optimal clearance values. For example, the model might learn that higher current levels correlate with increased brake lining 120 wear, necessitating a larger clearance to maintain performance. Once trained, the neural network can take real-time electrical quantity inputs from the actuator 110 and predict the optimal running clearance target value, ensuring efficient and safe braking performance under varying conditions. This approach leverages the model's ability to adapt to new data, continuously improving its predictions and enhancing the overall reliability of the brake 100.

Furthermore, it is conceivable that the model is trained with a vehicle parameter, in particular at least one of a deceleration of the vehicle 200, a temperature of a component of the brake 100, a swelling of the brake lining 120, a stiffness of a brake caliper 140, a friction coefficient between the brake lining 120 and the brake surface 130, or a running clearance of the brake 100. This ensures the model's robustness and effectiveness.

By way of example, the model may be trained with deceleration of the vehicle 200 in combination with a supervised learning paradigm. In this case, a regression model, such as a linear regression or a more complex model like a gradient boosting machine, can be employed. The training dataset may include historical data on vehicle 200 deceleration rates, along with corresponding running clearance target values. The model may learn to map the relationship between deceleration and the optimal clearance.

Supervised learning is particularly effective because it allows the model to learn from labeled data, where the input-output pairs are clearly defined. This paradigm ensures that the model can accurately predict the running clearance target value based on new deceleration data. The choice of a regression model is suitable because it can handle continuous output values, which is essential for predicting precise clearance adjustments. By training on a diverse dataset that captures various driving conditions and deceleration patterns, the model can generalize new, unseen data, resulting in robust performance and reliable predictions in real-world scenarios.

In another example, the temperature of a component of the brake 100 could be trained using unsupervised learning in combination with a clustering algorithm, in particular k-means. The model may group temperature readings into clusters that correspond to different clearance adjustments. This approach helps identify patterns in temperature data that correlate with optimal clearance values without needing labeled data.

In another example, the model may be trained with a swelling of the brake lining 120 with reinforcement learning. The model, in particular a Q-learning algorithm, may learn the optimal running clearance by interacting with the environment. It receives rewards based on the braking performance and adjusts the clearance to maximize the cumulative reward, effectively learning the best clearance settings through trial and error.

In another example, the model may be trained with the stiffness of a brake caliper 140 with semi-supervised learning. A model like self-training can be used, where a small amount of labeled data (stiffness measurements and clearance values) is combined with a large amount of unlabeled, in particular synthetic, data. The model iteratively labels the unlabeled data and retrains itself, improving its predictions over time.

In another example, the model may be trained with the friction coefficient between the brake lining 120 and the brake surface 130 with transfer learning. A pre-trained model on a similar task (e.g., predicting wear and tear in mechanical systems) can be fine-tuned with a smaller dataset of friction coefficients and clearance values. This approach leverages existing knowledge to improve performance on the new task.

In yet another example, the model may be trained with the running clearance of the brake 100 with unsupervised learning and principal component analysis (PCA). PCA reduces the dimensionality of the data, identifying the most significant features that influence running clearance. This helps in understanding the underlying structure of the data and optimizing the clearance based on the most critical factors.

It is understood that each of the parameters described in connection with a learning strategy could be replaced with another parameter of the list, or multiple parameters or multiple learning strategies could be combined.

Also, the control system 10 comprising one or more processors 11 collectively may further be configured to train a model, in particular with at least one of the vehicle parameters.

Furthermore, it is conceivable that the model is trained over a predetermined time or a predetermined travel distance of the vehicle 200. In other words, the model may be trained over a set period or distance traveled by the vehicle 200. This allows the system to adapt to changes and maintain accuracy.

For instance, training the model over a period of at least one month, in particular at least eight or 12 months, can encompass various seasonal conditions, such as temperature fluctuations and weather changes, which affect braking performance. Similarly, using distance intervals of several thousand kilometers ensures that the model learns from diverse driving conditions, including urban, suburban, and highway environments. These intervals allow the model to account for different wear and tear patterns, traffic conditions, and driving behaviors, leading to a robust and well-rounded understanding of the factors influencing the running clearance of the brake 100. This comprehensive training approach enhances the model's ability to make accurate and reliable predictions in real-world scenarios.

In another example training the model over using a relatively short interval could be a period of one week or less and/or a distance of 500 kilometers or less. This shorter interval allows the model to quickly adapt to recent changes in driving conditions and vehicle 200 performance. For instance, if the vehicle 200 has undergone maintenance or if there are sudden changes in weather conditions, the model can promptly incorporate this new data to adjust the running clearance target value. The advantage of this approach is that it enables the model to provide more immediate and responsive adjustments, enhancing the safety and efficiency of the braking system in real-time. Additionally, it allows for frequent updates and fine-tuning, ensuring that the model remains accurate and relevant to the current state of the vehicle 200 and its operating environment.

It is further conceivable that the model is trained over two predetermined times or two predetermined travel distances of the vehicle 200. The times and/or distances may be a shorter and a longer time and/or distance, in particular as described in the two examples.

Furthermore, it is conceivable that determining the running clearance target value further depends on an environmental parameter, in particular at least one of a temperature, lifetime of the brake 100, a traffic situation or a road condition. To put it another way, the running clearance target value may also consider environmental parameters. This ensures the system's adaptability to varying conditions.

An environmental parameter can be understood as a factor related to the surrounding conditions of the control system 10 and/or the brake 100 and/or the vehicle 200.

For instance, if the temperature of the brake 100 components rises significantly due to prolonged braking or high ambient temperatures, the model can predict that the brake linings 120 might expand. This expansion requires an adjustment in the running clearance to prevent excessive wear and ensure optimal braking performance. Simultaneously, the electrical quantity data from the actuator 110 provides insights into the braking force being applied and the actuator's 110 operational state.

By combining the electrical quantity with one of the environmental parameters, the model can make more accurate and context-aware adjustments to the running clearance. The advantage of this combination is that it allows the model to account for both the environmental, e.g. thermal effects, on the brake 100 components and the real-time operational status of the actuator 110. This leads to a more responsive and adaptive braking system that can maintain safety and efficiency under varying conditions, such as during heavy traffic, steep descents, or extreme weather. This approach ensures that the braking system remains reliable and effective, enhancing overall vehicle 200 performance and safety.

Turning again to Figure 3, it is conceivable that the one or more processors 11 collectively are further configured to at least store at least the running clearance in a memory, or send at least the running clearance target value, in particular via a bus system (not shown) of the vehicle 200, to another system of the vehicle 200. In other words, the processors 11 may store the running clearance in memory or send the target value to another vehicle 200 system via a bus system. This facilitates data sharing and system integration.

A bus system can be understood as a communication system within a vehicle 200.

For example, the running clearance target value may be written to a non-volatile memory. Further, the running clearance target value may be transmitted through the vehicle's 200 communication network, such as a CAN bus, to other electronic control units (ECUs). Also, the running clearance target value may be sent to integrated with systems of the vehicle 200 such as a braking control unit, a traction control system, or a stability control system. This enables real-time adjustments to the running clearance as well as the functioning of these systems, ensuring optimal braking performance and enhancing overall vehicle 200 safety and reliability.

Furthermore, it is conceivable that the one or more processors 11 collectively are further configured to at least determine a brake health status of the brake 100, in particular depending on the electrical quantity. This enhances the safety and maintenance of the brake 100 system.

A brake health status may be understood as an assessment of the brake's 100 condition.

For example, the brake health status may be determined by analyzing an electrical quantity of the brake 100 actuator 110, in particular the current, the voltage, or the power consumption. These electrical parameters may provide insights into the operational state of the braking system. For instance, an increase in current drawn during a braking activation might indicate higher resistance due to brake lining 120 wear or misalignment, while fluctuations in voltage could signal issues with the actuator's 110 performance. By continuously monitoring these electrical quantities, the system can detect anomalies and predict potential failures, allowing for timely maintenance and ensuring the brake 100 system remains in optimal condition. This proactive approach enhances vehicle 200 safety and reliability by addressing issues before they lead to significant problems.

According to a further aspect of the invention also illustrated in Figures 1 to 3, a brake 100 comprising a control system 10 according to one of the preceding claims is provided.

This gives the brake 100 the same advantages as those already described in detail in connection with an invention-related control system 10.

According to a further aspect of the invention that is illustrated in Figure 3, a vehicle 200 comprising at least a control system 10 according to the invention or the brake 100 according to the invention is provided. This gives the vehicle 200 the same advantages as those already described in detail in connection with an invention-related control system 10 and/or brake 100.

According to a further aspect of the invention that is illustrated in Figure 4, a method 300 for controlling a control system 10, in particular a control system 10 according to the invention, for a brake 100 of a vehicle 200 with an electric actuator 110 that is configured to adjust the distance between a brake lining 120 and a brake surface 130 is provided. The method 300 comprises monitoring 310 at least an electrical quantity of the electric actuator 110 for an activation of the brake 100 during a deceleration of the vehicle, determining 320 a running clearance target value between the brake lining 120 and the brake surface 130 depending at least on the monitored electrical quantity, and driving 330 the electric actuator 110 to adjust the distance between the brake lining 120 and the brake surface 1230 according to the determined running clearance.

This gives the method 300 the same advantages as those already described in detail in connection with an invention-related control system 10 and/or brake 100 and/or the vehicle 200.

Where the word 'or' appears, this is to be construed to mean 'and/or'. This is such that items referred to are not necessarily mutually exclusive and may be used in any appropriate combination.

The invention has been described above with reference to one or more specific embodiments. However, the description is not exhaustive, and the present invention is not limited to the embodiments described. Various changes and modifications can be made without departing from the scope of the invention as defined in the claims. For example, (insert any alternatives not yet mentioned here).

## Claims

1. A control system (10) for a brake (100) of a vehicle (200) with an electric actuator (110) that is configured to modify the distance between a brake lining (120) and a brake surface (130), the control system (10) comprising one or more processors (11) collectively configured to:
monitoring at least an electrical quantity of the electric actuator (110) for an activation of the brake (100),
determining a running clearance target value between the brake lining (120) and the brake surface (130) depending at least on the monitored electrical quantity,
driving the electric actuator (100) to modify the distance between the brake lining (120) and the brake surface (130) according to the determined running clearance target value.

2. The control system (10) according to claim 1, wherein the one or more processors (11) collectively are further configured to at least:
measuring a vehicle parameter, in particular at least one of a deceleration of the vehicle (200), a temperature of a component (110, 120, 130, 140) of the brake (100), a swelling of the brake lining (120), a stiffness of a brake caliper (140), a friction coefficient between the brake lining (120) and the brake surface (130), or a running clearance of the brake (100), or
comparing the vehicle parameter with a threshold.

3. The control system (10) according to claim 1 or 2, wherein
determining the running clearance target value comprises the application of a learned model, in particular a machine learned model.

4. The control system (10) according to claim 3, wherein
the model is trained with at least an electrical quantity of the electric actuator (110) and an running clearance target value.

5. The control system (10) according to claims 3 or 4, wherein
the model is trained with a vehicle parameter, in particular at least one of a deceleration of the vehicle (200), a temperature of a component (110, 120, 130, 140) of the brake (100), a swelling of the brake lining (120), a stiffness of a brake caliper (140), a friction coefficient between the brake lining (120) and the brake surface (130), or a running clearance of the brake (100).

6. The control system (10) according to any one of claims 3 to 5, wherein
the model is trained over a predetermined time or a predetermined travel distance of the vehicle (200).

7. The control system (10) according to any of the preceding claims, wherein
determining the running clearance target value further depends on an environmental parameter, in particular at least one of a temperature, lifetime of the brake (100), a traffic situation or a road condition.

8. The control system (10) according to any of the preceding claims, wherein the one or more processors (11) collectively are further configured to at least:
storing at least the running clearance in a memory, or
sending at least the running clearance target value, it particular via a bus system of the vehicle (200), to another system of the vehicle (200).

9. The control system (10) according to any of the preceding claims, wherein the one or more processors (11) collectively are further configured to at least:
determining a brake health status of the brake (100), in particular depending on the electrical quantity.

10. A brake (100) comprising a control system (10) according to any one of the preceding claims and the electric actuator (110).

11. The brake (100) according to claim 10, wherein the distance between the brake lining (120) and the brake surface (130) is modified independently of or addition to a clearance target of a brake adjuster.

12. A vehicle (200) comprising at least a control system (10) according to any one of claim 1 to 9 or the brake (100) of claim 10.

13. A method (300) for controlling a control system (10), in particular according to one of claims 1 to 9, for a brake (100) of a vehicle (200) with an electric actuator (110) that is configured to adjust the distance between a brake lining (120) and a brake surface (130), the method comprising:
monitoring (310) at least an electrical quantity of the electric actuator (110) for an activation of the brake (100) during a deceleration of the vehicle (200),
determining (320) a running clearance target value between the brake lining (120) and the brake surface (130) depending at least on the monitored electrical quantity,
driving (330) the electric actuator (110) to adjust the distance between the brake lining (120) and the brake surface (130) according to the determined running clearance.

14. Computer readable instructions which, when executed by a computer, are arranged to perform a method according to claim 13.
